# EUROPÄISCHE PATENTSCHRIFT

(11) **EP 0 944 487 B1**
(45) Veröffentlichungstag und Bekanntmachung des Hinweises auf die Patenterteilung: **15.09.2004**
(21) Anmeldenummer: 98959701.8
(22) Anmeldetag: 01.10.1998
(51) Int. Cl.: B60H 1/34

(54) **FRISCHLUFT-DÜSENEINRICHTUNG FÜR EIN FAHRZEUG**
FRESH AIR NOZZLE SYSTEM FOR A VEHICLE
SYSTEME DE DUSE D'AERATION POUR VEHICULE

(30) Priorität: 17.10.1997 DE 19745933
(43) Veröffentlichungstag der Anmeldung: 29.09.1999
(73) Patentinhaber: Dr. Franz Schneider Kunststoffwerke GmbH & Co. KG, 96317 Kronach (DE)
(72) Erfinder: VOLK, Siegfried, D-96317 Kronach (DE)
(74) Vertreter: LOUIS- PÖHLAU- LOHRENTZ
(86) Internationale Anmeldenummer: PCT/DE1998/002918
(87) Internationale Veröffentlichungsnummer: WO 1999/020479

(56) Entgegenhaltungen:
- DE-A- 3 610 894
- GB-A- 1 319 449

## Beschreibung

Die Erfindung betrifft eine Frischluft-Düseneinrichtung für den Fahrgastraum eines Fahrzeugs, mit einem Gehäuse, das auslaßseitig mit Lamellen zur Lenkung der Luftströmung und mit einem Lamellen-Verstellorgan versehen ist, wobei das Gehäuse auflaßseitig einen kreisrunden Öffnungs-Endabschnitt aufweist, an welchem ein das Lamellen-Verstellorgan bildender Verstellring drehbar vorgesehen ist, der mit den Lamellen verbunden ist.

Es sind Frischluft-Düseneinrichtungen bekannt, die auslaßseitig mit einer Öffnung rechteckigen Querschnitts ausgebildet sind. Diese Frischluft-Düseneinrichtungen weisen üblicherweise horizontale Lamellen und gegen diese in Längsrichtung versetzte vertikale Lamellen auf. Dabei sind die einen Lamellen bspw. mit dem Gehäuse einstückig verbunden, während die anderen Lamellen im Gehäuse verschwenkbar vorgesehen sind. Zur Verschwenkung der zuerst genannten Lamellen wird hierbei z.B. das Gehäuse insgesamt verschwenkt.

Eine Frischluft-Düseneinrichtung der eingangs genannten Art ist aus der DE 36 10 894 A1 bekannt. Bei dieser bekannten Frischluft-Düseneinrichtung besteht das Gehäuse, das zum Umlenken des Luftstromes Lamellen aufweist, und das zum Ändern der Ausströmrichtung um die Mittelachse eines Luftkanales drehbar ist, aus einem Verteilerring und einem davon stulpenartig abstehenden Aufsteckmantel mit nachgiebigen Mantelsegmenten zum Aufstecken auf den Luftkanal. Die Lamellen sind im Bereich des Verteilerringes des Gehäuses vorgesehen.

Aus der GB-A- 13 19 449 ist eine Frischluft-Düseneinrichtung für den Fahrgastraum eines Fahrzeuges bekannt, die ein zylindrisches Gehäuse mit einem Verstellring aufweist. An der mit dem Verstellring versehenen Auslaßseite des zylindrischen Gehäuses sind Lamellen vorgesehen, die mit Hilfe des Verstellringes verstellbar, d.h. wunschgemäß einstellbar sind, um eine gezielte Luftlenkung vornehmen zu können. An der Auslaßseite des zylindrischen Gehäuses ist mittig ein Verstellknopf drehbar gelagert, der mit zwei halbkreisförmigen Klappenelementen verbunden ist. Jedes dieser beiden Klappenelemente ist mit einem Zapfen ausgebildet, der in einen zugehörigen, im zylindrischen Gehäuse vorgesehenen Schlitz hineinsteht. Die beiden Schlitze sind gegen die Umfangsrichtung des Gehäuses geneigt, so daß eine Drehung des Verstellknopfes eine Verstellung der beiden Klappenelemente zwischen einer Verschlußstellung und einer Öffnungsstellung bewirkt. Die Lamellen sind bei dieser bekannten Frischluft-Düseneinrichtung nur in Umfangsrichtung des Gehäuses verstellbar.

Der Erfindung liegt die Aufgabe zugrunde, eine Frischluft-Düseneinrichtung der eingangs genannten Art zu schaffen, die herstellungstechnisch einfach aufgebaut ist, wobei die Lamellen-Verstellung mit Hilfe eines die Auslaßöffnung begrenzenden Lamellen-Verstellorganes erfolgt.

Diese Aufgabe wird bei einer Frischluft-Düseneinrichtung der eingangs genannten Art erfindungsgemäß dadurch gelöst, daß der Öffnungs-Endabschnitt des Gehäuses mit zwei in Umfangsrichtung des Gehäuses orientierten, sich diametral gegenüberliegenden Längsschlitzen ausgebildet ist, durch die sich jeweils ein Verbindungszapfen hindurcherstreckt, die miteinander axial fluchten und mittels welchen der Verstellring mit einem Innenring verbunden ist, der mit den Lamellen verbunden ist. Dabei können die Lamellen mit dem Innenring einteilig ausgebildet sein. Das ist unter Herstellungsgesichtspunkten zweckmäßig, weil es dann nicht notwendig ist, die Lamellen einzeln zu handhaben und mit dem Innenring zu verbinden.

Bei der erfindungsgemäßen Frischluft-Düseneinrichtung ist es zweckmäßig, wenn der Öffnungs-Endabschnitt des Gehäuses innenseitig mit einem eine Kugelkrümmung aufweisenden konkaven Ringabschnitt ausgebildet ist, dessen Krümmungsmittelpunkt durch den Schnittpunkt der Mittelachse der beiden Verbindungszapfen mit der Längsachse des Gehäuses festgelegt ist, und wenn der Innenring außenseitig mit einer an den konkaven Ringabschnitt des Gehäuses formmäßig angepaßten konvex gekrümmten Außenkontur ausgebildet ist. Durch eine solche Ausbildung ergibt sich gleichsam eine kugelgelenkige Anordnung des Innenringes mit den Lamellen in Bezug zum Öffnungs-Endabschnitt des Gehäuses der erfindungsgemäßen Frischluft-Düseneinrichtung, so daß die zueinander parallel orientierten Lamellen wunschgemäß gemeinsam verstellt werden können.

Eine andere Möglichkeit besteht darin, daß bei der erfindungsgemäßen Frischluft-Düseneinrichtung die im Innenring vorgesehenen Lamellen gemeinsam schwenkbeweglich sind. Bei einer solchen Ausbildung der zuletzt genannten Art sind die Lamellen um die Längsachse des Gehäuses wunschgemäß verschwenkbar und in Bezug zum Innenring umklappbar. Auch eine solche erfindungsgemäße Ausbildung ermöglicht also eine gezielte Lenkung der aus der Frischluft-Düseneinrichtung austretenden Luftströmung.

Weitere Einzelheiten, Merkmale und Vorteile ergeben sich aus der nachfolgenden Beschreibung zweier in der Zeichnung abschnittweise perspektivisch dargestellter Ausbildungen der erfindungsgemäßen Frischluft-Düseneinrichtung. Es zeigen:
- Fig. 1: eine erste Ausbildung der Frischluft-Düseneinrichtung, und
- Fig. 2: in einer der Fig. 1 ähnlichen räumlichen Darstellung abschnittweise eine zweite Ausbildung der Frischluft-Düseneinrichtung.

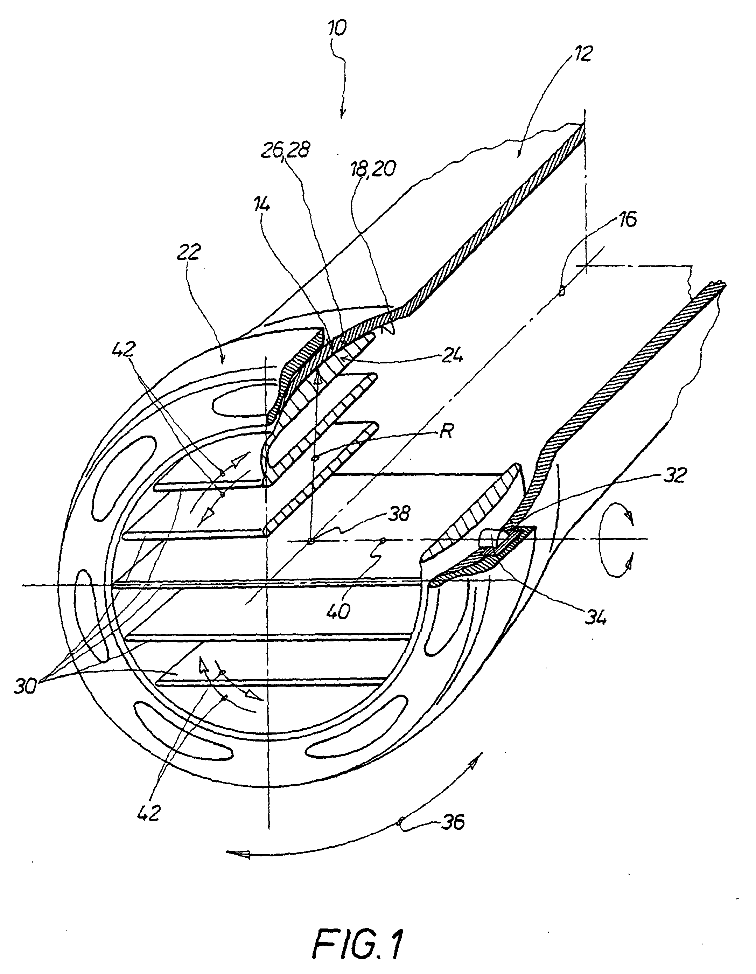

Fig. 1 zeigt eine Ausbildung der Frischluft-Düseneinrichtung 10 für den Fahrgastraum eines Fahrzeugs, die ein rohrartiges Gehäuse 12 aufweist, das abgeschnitten dargestellt ist. Die Frischluft-Düseneinrichtung 10 ist außerdem aufgeschnitten gezeichnet, um wesentliche Einzelheiten zu verdeutlichen.

Das Gehäuse 12 ist auslaßseitig mit einem kreisrunden Öffnungs-Endabschnitt 14 ausgebildet, der zur Längsachse 16 des Gehäuses 12 konzentrisch ist. Der Öffnungs-Endabschnitt 14 ist außerdem an seiner Innenseite 18 mit einem eine Kugelkrümmung aufweisenden konkaven Ringabschnitt 20 ausgebildet.

An der Außenseite des Öffnungs-Endabschnittes 14 des Gehäuses 12 ist ein Verstellring 22 vorgesehen, der in Umfangsrichtung des kreisrunden Öffnungs-Endabschnittes 14 verstellbar ist. Mit dem Verstellring 22 ist ein Innenring 24 verbunden. Der Innenring 24 ist an seiner Außenseite 26 mit einer Außenkontur 28 ausgebildet, die konvex gekrümmt an den konkav gekrümmten Ringabschnitt 20 des Gehäuses 12 formmäßig angepaßt ist. Lamellen 30 erstrecken sich von einer zur anderen Seite des Innenringes 24, sie sind mit dem Innenring 24 einstückig ausgebildet.

Der Öffnungs-Endabschnitt 14 des Gehäuses 12 ist mit zwei Längsschlitzen 32 ausgebildet, von welchen in Fig. 1 nur der eine Längsschlitz 32 sichtbar ist. Die beiden Längsschlitze 32 verlaufen in Umfangsrichtung des Gehäuses 12 bzw. des Öffnungs-Endabschnittes 14 des Gehäuses 12 und liegen sich diametral in Bezug auf die Längsachse 16 des Gehäuses 12 gegenüber.

Der Innenring 24 und der Verstellring 22 sind miteinander mittels zweier Verbindungszapfen 34 verbunden, von welchen in Fig. 1 ebenfalls nur ein Verbindungszapfen 34 sichtbar ist. Die Verbindungszapfen 34 erstrecken sich durch die zugehörigen Längsschlitze 32 im Öffnungs-Endabschnitt 14 des Gehäuses 12 hindurch. Entsprechend der in Umfangsrichtung gesehenen Längserstreckung der beiden Längsschlitze 32 sind die Lamellen 30 mit Hilfe des Verstellringes 22 in Umfangsrichtung verschwenkbar, was durch den bogenförmigen Doppelpfeil 36 verdeutlicht ist.

Der konkave Ringabschnitt 20 an der Innenseite 18 des Öffnungs-Endabschnittes 14 des Gehäuses 12 weist eine Kugelkrümmung auf, die durch den Pfeil R bezeichnet ist. Der Krümmungsmittelpunkt 38 der Kugelkrümmung R ist durch den Schnittpunkt der Mittelachse 40 der beiden miteinander axial fluchtenden Verbindungszapfen 34 mit der Längsachse 16 des Gehäuses 12 festgelegt. Durch eine solche kugelartige Gestaltung ist es möglich, die Lamellen 30 um die beiden axial fluchtenden Verbindungszapfen 34 herum zu verschwenken, was durch die bogenförmigen Pfeile 42 verdeutlicht ist.

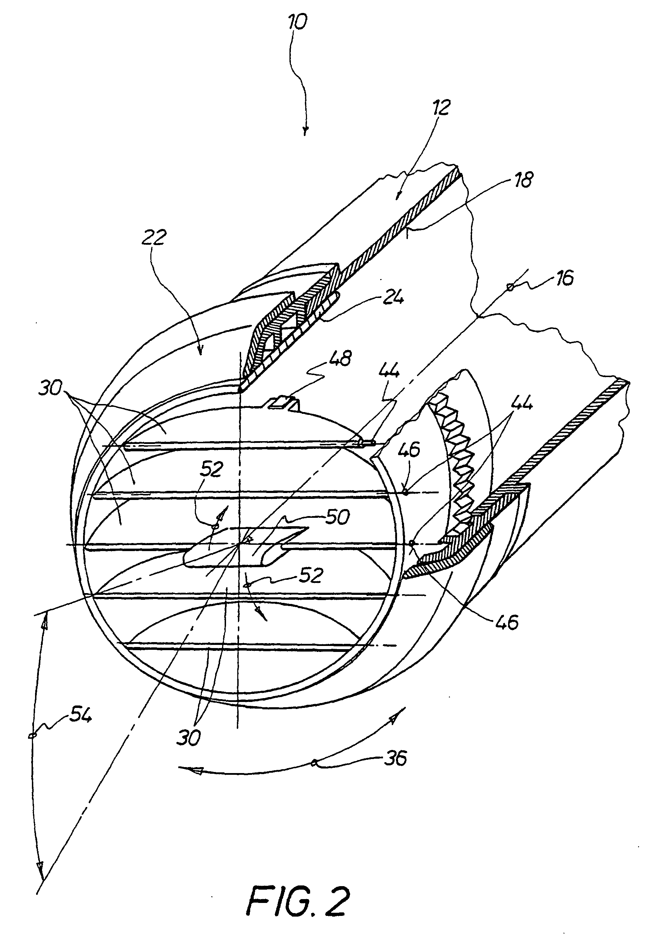

Die Frischluft-Düseneinrichtung 10 gemäß Fig. 1 läßt folglich eine Verschwenkung der Lamellen 30 innerhalb eines großen dreidimensionalen Raumbereichs zu. Einen noch größeren Verstellbereich weist die Ausbildung der Frischluft-Düseneinrichtung 10 gemäß Fig. 2 auf, bei welcher der Verstellring 22 mit dem Innenring 24, der einfach zylindrisch gestaltet ist, fest verbunden ist. Der Innenring 24 ist von Lamellen 30 überspannt, die zueinander - wie bei der Ausbildung gemäß Fig. 1 - parallel orientiert vorgesehen sind. Bei der Ausbildung gemäß Fig. 2 sind die Lamellen 30 jedoch nicht integrale Bestandteile des Innenringes 24 sondern an diesem schwenkbeweglich vorgesehen. Zu diesem Zwecke sind die Lamellen 30 mit Lagerzapfen 44 ausgebildet, die in Löchern 46 im Innenring 24 gelagert sind. Die Lamellen 30 sind miteinander in an sich bekannter Weise mittels eines Verbindungsorganes 48 beweglich verbunden. Die mittlere Lamelle 30 ist mit einem Betätigungsorgan 50 versehen, um alle Lamellen 30 gemeinsam verschwenken zu können, was in Fig. 2 durch die bogenförmigen Pfeile 52 angedeutet ist. Der Pfeil 54 verdeutlicht den entsprechenden Einstellbereich der Luftströmung in dieser Raumrichtung. Durch Verdrehen des Verstellringes 22 ist eine Lenkung der Luftströmung in der dazu senkrechten Raumrichtung möglich. Die zuletzt genannte Verdrehung des Verstellringes 22 ist - wie in Fig. 1 - durch den Pfeil 36 verdeutlicht. Bei der Ausbildung gemäß Fig. 2 ist der Verstellring 22 problemlos um 360° in Richtung des Doppelpfeiles 36 verstellbar.

## Patentansprüche

1. Frischluft-Düseneinrichtung für den Fahrgastraum eines Fahrzeugs, mit einem Gehäuse (12), das auslaßseitig mit Lamellen (30) zur Lenkung der Luftströmung und mit einem Lamellen-Verstellorgan versehen ist, wobei das Gehäuse (12) auslaßseitig einen kreisrunden Öffnungs-Endabschnitt (14) aufweist, an welchem ein das Lamellen-Verstellorgan bildender Verstellring (22) drehbar vorgesehen ist, der mit den Lamellen (30) verbunden ist,
**dadurch gekennzeichnet,**
**daß** der Öffnungs-Endabschnitt (14) des Gehäuses (12) mit zwei in Umfangsrichtung des Gehäuses (12) orientierten, sich diametral gegenüberliegenden Längsschlitzen (32) ausgebildet ist, durch die sich jeweils ein Verbindungszapfen (34) hindurcherstreckt, die miteinander axial fluchten und mittels welchen der Verstellring (22) mit einem Innenring (24) verbunden ist, der mit den Lamellen (30) versehen ist.

2. Frischluft-Düseneinrichtung nach Anspruch 1,
**dadurch gekennzeichnet,**
**daß** die Lamellen (30) mit dem Innenring (24) einstückig ausgebildet sind.

3. Frischluft-Düseneinrichtung nach Anspruch 1,
**dadurch gekennzeichnet,**
**daß** der Öffnungs-Endabschnitt (14) des Gehäuses (12) innenseitig mit einem eine Kugelkrümmung (R) aufweisenden konkaven Ringabschnitt (20) ausgebildet ist, dessen Krümmungsmittelpunkt (38) durch den Schnittpunkt der Mittelachse (40) der beiden verbindungszapfen (34) mit der Längsachse (16) des Gehäuses (12) festgelegt ist, und daß der Innenring (24) außenseitig mit einer an den konkaven Ringabschnitt (20) des Gehäuses (12) formmäßig angepaßten konvex gekrümmten Außenkontur (28) ausgebildet ist.

4. Frischluft-Düseneinrichtung nach Anspruch 1,
**dadurch gekennzeichnet,**
**daß** die im Innenring (24) vorgesehenen Lamellen (30) gemeinsam schwenkbeweglich sind.

## Claims

1. Fresh air nozzle device for the passenger compartment of a vehicle, having a housing (12) which is provided on the outlet side with laminations (30) for directing the airflow, and with a lamination adjustment element, the housing (12) having on the outlet side a circular opening end section (14) on which an adjustment ring (22) which forms the lamination adjustment element is rotatably provided, said adjustment ring (22) being connected to the laminations (30), **characterized in that** the opening end section (14) of the housing (12) is constructed with two longitudinal slits (32) which are oriented in the circumferential direction of the housing (12) and are diametrically opposite one another and through which in each case a connecting pin (34) extends, said connecting pins being aligned with one another and being used to connect the adjustment ring (22) to an internal ring (24) which is provided with the laminations (30).

2. Fresh air nozzle device according to Claim 1, **characterized in that** the laminations (30) are formed in one piece with the internal ring (24).

3. Fresh air nozzle device according to Claim 1, **characterized in that** the opening end section (14) of the housing (12) is formed on the inside with a concave annular section (20) which has a spherical curvature (R) and whose curvature centre point (38) is defined by the point of intersection of the central axis (40) of the two connecting pins (34) with the longitudinal axis (16) of the housing (12), and that the internal ring (24) is formed on the outside with a convexly curved external contour (28) which is matched in shape to the concave annular section (20) of the housing (12).

4. Fresh air nozzle device according to Claim 1, **characterized in that** the laminations (30) which are provided in the internal ring (24) can be moved in a pivoting fashion together.

## Revendications

1. Système de duse d'aération pour l'habitacle d'un véhicule, avec un boîtier (12) doté de lamelles (30) pour le guidage du flux d'air et d'un organe de réglage des lamelles côté sortie, le boîtier (12) comportant côté sortie une section finale d'ouverture circulaire (14) sur laquelle un anneau de réglage (22) rotatif qui forme l'organe de réglage des lamelles est prévu, **caractérisé en ce que** la section finale d'ouverture (14) du boîtier (12) est formée de deux fentes longitudinales (32) diamétralement opposées orientées dans le sens circonférentiel du boîtier (12), traversées chacune par un pivot de liaison (34), alignées axialement l'une sur l'autre et grâce auxquelles l'anneau de réglage (22) est relié à un anneau intérieur (24) qui est doté des lamelles (30).

2. Système de duse d'aération selon la revendication 1, **caractérisé en ce que** les lamelles (30) ne forment qu'une pièce avec l'anneau intérieur (24).

3. Système de duse d'aération selon la revendication 1, **caractérisé en ce que** la face intérieure de la section finale d'ouverture (14) du boîtier (12) forme une section annulaire concave (20) comportant une courbe sphérique (R), dont le centre de courbure (38) est déterminé par le point d'intersection de l'axe central (40) des deux pivots de liaison (34) et de l'axe longitudinal (16) du boîtier (12), et **en ce que** la face extérieure de l'anneau intérieur (24) est formée par un contour extérieur (28) à courbe convexe dont la forme est adaptée à la section annulaire (20) du boîtier (12).

4. Système de duse d'aération pour véhicule selon la revendication 1, **caractérisé en ce que** les lamelles (30) prévues dans la bague intérieure (24) peuvent pivoter ensemble.
